# EUROPÄISCHE PATENTANMELDUNG

(11) **EP 1 926 167 A1**
(43) Veröffentlichungstag der Anmeldung: **28.05.2008**
(21) Anmeldenummer: 07120585.0
(22) Anmeldetag: 13.11.2007
(51) Int. Cl.: H01M 8/04, H01M 8/06, H01M 8/00, B60H 1/32

(54) **Fahrzeug mit einer Kühleinrichtung und einem Brennstoffzellensystem**

(30) Priorität: 21.11.2006 DE 102006055198
(71) Anmelder: J. Eberspächer GmbH & Co. KG, 73730 Esslingen (DE)
(72) Erfinder: Reiners, Karsten, 73732 Esslingen (DE)
(74) Vertreter: Bongen, Renaud & Partner

(57) **Zusammenfassung**

Die Erfindung betrifft ein Fahrzeug (1), insbesondere ein Straßenfahrzeug, mit einer Kühleinrichtung (2) zum Kühlen eines Raums (4) des Fahrzeugs (1) und mit einem Brennstoffzellensystem (3) zum Generieren von elektrischem Strom (13).

Um die Effektivität des Brennstoffzellensystems (3) zu verbessern, ist eine Wasserzuführeinrichtung (39) zum Versorgen des Brennstoffzellensystems (3) mit Kondenswasser der Kühleinrichtung (2) vorgesehen.

## Beschreibung

Die vorliegende Erfindung betrifft ein Fahrzeug, insbesondere ein nicht schienengebundenes Straßenfahrzeug.

Zur Kühlung beziehungsweise zur Klimatisierung eines Fahrzeugraums, beispielsweise eines Passagierraums und/oder eines Nutz- oder Laderaums, kann ein Fahrzeug mit einer Kühleinrichtung beziehungsweise mit einer eine Kühleinrichtung umfassenden Klimaanlage ausgestattet sein.

Moderne Straßenfahrzeuge oder Kraftfahrzeuge können mit einem Brennstoffzellensystem ausgestattet sein, mit dessen Hilfe elektrischer Strom generiert werden kann. Das Brennstoffzellensystem kann dabei eine zusätzliche oder die einzige Stromquelle des Fahrzeugs bilden. Insbesondere ermöglicht das Brennstoffzellensystem eine Stromversorgung des Fahrzeugs beziehungsweise von elektrischen Verbrauchern des Fahrzeugs unabhängig von einer Brennkraftmaschine des Fahrzeugs. Beispielsweise kann bei stehendem Fahrzeug und bei ausgeschalteter Brennkraftmaschine mit Hilfe des Brennstoffzellensystems Strom zum Betreiben der Kühleinrichtung beziehungsweise der Klimaanlage geliefert werden. Ebenso sind Kraftfahrzeuge mit Elektromotor bekannt, bei denen das Brennstoffzellensystem den elektrischen Strom zum Betreiben des Elektromotors liefert.

Die vorliegende Erfindung beschäftigt sich mit dem Problem, für ein Fahrzeug der eingangs genannten Art eine verbesserte Ausführungsform anzugeben, die sich insbesondere durch eine erhöhte Effektivität des Brennstoffzellensystems beziehungsweise durch einen vereinfachten Betrieb des Brennstoffzellensystems auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, Kondenswasser, das beim Betrieb der Kühleinrichtung anfällt, dem Brennstoffzellensystem zuzuführen. Hierzu schlägt die Erfindung eine Wasserzuführeinrichtung zum Versorgen des Brennstoffzellensystems mit dem Kondenswasser der Kühleinrichtung vor. Mit Hilfe von Wasser beziehungsweise mit Hilfe von Wasserdampf kann beispielsweise in einem Reformer des Brennstoffzellensystems, mit dem Wasserstoffgas enthaltendes Anodengas generiert wird, der Wasserstoffgehalt im Anodengas erhöht werden, wodurch gleichzeitig die Temperatur des Reformers absenkbar ist. Die Versorgung des Reformers mit Wasserdampf erhöht somit dessen Effektivität sowie dessen Lebensdauer. Zusätzlich oder alternativ kann einer Brennstoffzelle des Brennstoffzellensystems anodenseitig Wasser beziehungsweise Wasserdampf zugeführt werden, der zumindest bei bestimmten Betriebszuständen des Brennstoffzellensystems eine Regeneration der Anodenseite der Brennstoffzelle bewirken kann. Beispielsweise können mit Hilfe des dem Anodengas beigemischten Wasserdampfs Verunreinigungen abgereinigt werden, die sich während des Betriebs der Brennstoffzelle an der Anode ablagern. Durch die reinigende beziehungsweise regenerierende Wirkung des dem Anodengas beigemischten Wasserdampfs kann die Funktionsfähigkeit der Brennstoffzelle erhöht und somit der Wirkungsgrad des Brennstoffzellensystems verbessert werden.

Besonders vorteilhaft bei der vorliegenden Erfindung ist dabei, dass das zur Wirkungsgradsteigerung beziehungsweise zur Funktionalitätsverbesserung verwendete Wasser durch das Kondenswasser der Kühl- bzw. Klimaeinrichtung gebildet ist, also von einer am Fahrzeug ohnehin vorhandenen Wasserquelle stammt. Zusätzliche Maßnahmen zur Bereitstellung von Wasser für das Brennstoffzellensystem können somit entfallen. Die vorliegende Erfindung lässt sich daher vergleichsweise preiswert realisieren. Gleichzeitig zeichnet sich das Kondenswasser der Kühleinrichtung durch einen relativ hohen Reinheitsgrad aus.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

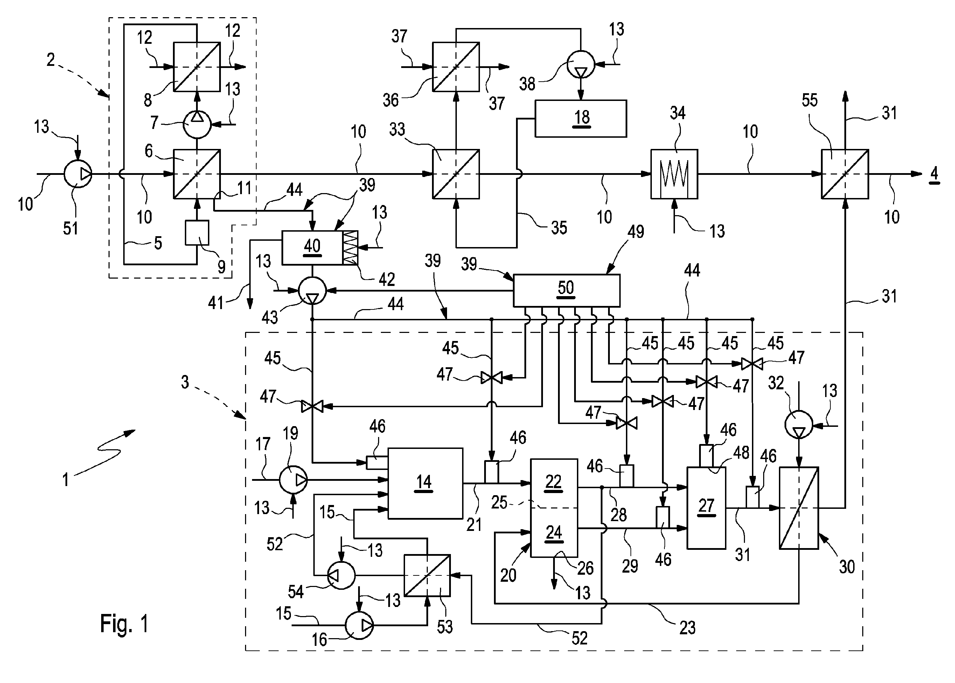

Die einzige Fig. 1 zeigt eine stark vereinfachte, schaltplanartige Prinzipdarstellung eines Fahrzeugs.

Entsprechend Fig. 1 weist ein nur teilweise dargestelltes Fahrzeug 1 eine Kühleinrichtung 2, symbolisiert durch einen mit unterbrochener Linie gezeichneten Rahmen, sowie ein Brennstoffzellensystem 3 auf, ebenfalls symbolisiert durch einen mit unterbrochener Linie gezeichneten Rahmen. Beim Fahrzeug handelt es sich bevorzugt um ein Kraftfahrzeug, also um ein Straßenfahrzeug, das nicht an Schienen gebunden ist. Ebenso kann es sich beim Fahrzeug um ein schienengebundenes Straßenfahrzeug handeln, wie zum Beispiel eine Stra-βenbahn. Die Erfindung ist jedoch grundsätzlich nicht auf Straßenfahrzeuge beschränkt, so dass es sich beim Fahrzeug grundsätzlich auch um ein Schiff, ein Flugzeug oder einen Zug handeln kann.

Die Kühleinrichtung 2 dient zum Kühlen eines Raums 4 des Fahrzeugs 1, bei dem es sich vorzugsweise um einen Passagierraum beziehungsweise Fahrzeuginnenraum handelt, bei dem es sich jedoch auch um einen Nutzraum oder Laderaum oder Frachtraum handeln kann. Die Kühleinrichtung 2 wird üblicherweise auch als Klimaeinrichtung bezeichnet. In der Regel umfasst eine Klimaanlage eine derartige Kühleinrichtung 2.

Die Kühleinrichtung 2 besitzt einen üblichen Aufbau und umfasst somit in einem Kältekreis 5 einen Verdampfer 6, stromab davon einen Kompressor 7, stromab davon einen Kondensator 8 und stromab davon ein Expansionsventil 9. Im Kältekreis 5 zirkuliert ein geeignetes Kältemittel, das im Verdampfer 6 expandiert beziehungsweise verdampft wird, im Kompressor 7 komprimiert wird und im Kondensator 8 wieder verflüssigt wird. Das Expansionsventil 9 regelt temperaturabhängig den Strom des Kältemittels zum Verdampfer 6.

Der Verdampfer 6 ist als Wärmeübertrager ausgestaltet und ist in eine Belüftungsleitung 10 des Fahrzeugs 1 eingebunden, die dem jeweiligen Fahrzeugraum 4 Umluft oder Frischluft zuführt. Zum Antreiben der dem jeweiligen Fahrzeugraum 4 zuzuführenden Gasströmung kann in der Belüftungsleitung 10 eine entsprechende Fördereinrichtung 51, vorzugsweise ein Gebläse, angeordnet sein, das insbesondere mit dem vom Brennstoffzellensystem 3 generierten Strom 13 betrieben werden kann. Für diese Belüftungsleitung 10 bildet der Verdampfer 6 einen Kühler beziehungsweise einen Trockner, die im Folgenden daher ebenfalls mit 6 bezeichnet werden. Der Kühler 6 beziehungsweise Trockner 6 dient zum Kühlen beziehungsweise zum Trocknen einer Gasströmung, vorzugsweise einer Luftströmung, mit der der zu kühlende Raum 4 beaufschlagt wird. Dementsprechend kann dem Raum 4 getrocknete und/oder gekühlte Frischluft und/oder Umluft zugeführt werden. Der Kühler beziehungsweise Trockner 6 wird regelmäßig so betrieben, dass darin die in der Belüftungsleitung 10 transportierte Gasströmung unter den Taupunkt abkühlt, so dass darin mitgeführter Wasserdampf kondensiert. Der Kühler oder Trockner 6 beziehungsweise der Verdampfer 6 weist einen Kondensatablauf 11 auf, durch den das im Verdampfer 6 gebildete Kondensat oder Kondenswasser abfließen kann.

Beim Kondensator 8 des Kältekreises 5 handelt es sich ebenfalls um einen Wärmeübertrager. Im Kondensator 8 findet eine Abkühlung des Kältemittels statt. Die dabei frei gesetzte Wärme wird ebenfalls durch eine Gasströmung, vorzugsweise durch eine Luftströmung 12, abgeführt, die durch den Fahrtwind des Fahrzeugs entsteht und die insbesondere durch ein nicht gezeigtes Kühlergebläse des Fahrzeugs 1 unterstützt sein kann.

Das Brennstoffzellensystem 3 dient in herkömmlicher Weise zum Generieren von elektrischem Strom 13, der hier durch einen Pfeil symbolisiert ist. Mit dem Strom 13 können verschiedene elektrische Verbraucher des Fahrzeugs 1 versorgt werden. Beispielsweise kann der Kompressor 7 der Kühleinrichtung 2 mit dem Strom 13 des Brennstoffzellensystems 3 versorgt werden.

Das Brennstoffzellensystem 3 umfasst beispielsweise einen Reformer 14, mit dessen Hilfe aus einem Wasserstoff enthaltenden Brennstoff und einem Sauerstoff enthaltenden Oxidator ein Reformatgas oder Anodengas generiert werden kann, das Wasserstoffgas enthält. An den Reformer 14 ist eingangsseitig eine Oxidatorleitung 15 angeschlossen, über die der Oxidator, z.B. Luft, zuführbar ist. Die Oxidatorleitung 15 enthält eine Fördereinrichtung 16, z.B. ein Gebläse, die insbesondere mit dem Strom 13 des Brennstoffzellensystems 3 betrieben wird. Der Reformer 14 ist eingangsseitig außerdem an eine Brennstoffleitung 17 angeschlossen, über die der jeweilige Brennstoff, zweckmäßig ein Kohlenwasserstoff, wie zum Beispiel Benzin, Diesel oder Erdgas, dem Reformer 14 zuführbar ist. Zweckmäßig verwendet der Reformer 14 als Brennstoff einen Kraftstoff, der einer Brennkraftmaschine 18 des Fahrzeugs 1 zur Verbrennung beziehungsweise zur Umsetzung in Antriebsarbeit zugeführt wird, sofern das Fahrzeug 1 mit einer derartigen Brennkraftmaschine 18 ausgestattet ist. In der Oxidatorleitung 17 kann eine Fördereinrichtung 19, vorzugsweise eine Pumpe, angeordnet sein, die insbesondere mit dem Strom 13 des Brennstoffzellensystems 3 betrieben wird.

Grundsätzlich kann es sich beim Fahrzeug 1 auch um ein E-lektrofahrzeug handeln, das anstelle einer Brennkraftmaschine 18 einen Elektromotor aufweist, wobei es insbesondere vorgesehen sein kann, den Elektromotor mit dem vom Brennstoffzellensystem 3 generierten Strom 13 zu betreiben.

Das Brennstoffzellensystem 3 umfasst außerdem eine Brennstoffzelle 20. Diese dient in herkömmlicher Weise dazu, aus einem Wasserstoffgas enthaltenden Anodengas und einem Sauerstoffgas enthaltenden Kathodengas den elektrischen Strom 13 zu generieren. Das Anodengas, also das Reformatabgas des Reformers 14 erhält die Brennstoffzelle 20 über eine Anodengasleitung 21, die den Reformer 14 ausgangsseitig mit einer Anodenseite 22 der Brennstoffzelle 20 verbindet. Das Kathodengas, vorzugsweise Luft, erhält die Brennstoffzelle 20 über eine Kathodengasleitung 23, die an eine Kathodenseite 24 der Brennstoffzelle 20 ausgeschlossen ist. Die Brennstoffzelle 20 enthält einen Elektrolyt 25, vorzugsweise eine Membran, der die Anodenseite 22 von der Kathodenseite 24 trennt. Im Betrieb der Brennstoffzelle 20 ist an wenigstens einem Stromanschluss 26 der elektrische Strom 13 abgreifbar. Bei der Brennstoffzelle 20 handelt es sich vorzugsweise um eine Hochtemperatur-Brennstoffzelle beziehungsweise um eine Festkörper-Brennstoffzelle, sogenannte SOFC-Brennstoffzelle. Grundsätzlich kann es sich bei der Brennstoffzelle 20 auch um eine Niedertemperatur-Brennstoffzelle handeln, vorzugsweise um eine PEM-Brennstoffzelle, die mit einer Protonen-Transport-Membran beziehungsweise mit einer Polymer-Elektrolyt-Membran arbeitet. Sofern es sich um eine PEM-Brennstoffzelle handelt, kann dem Reformer 14 zusätzlich eine hier nicht gezeigte CO-Gasreinigungseinrichtung zugeordnet sein, um den Kohlenmonoxidgehalt im Reformatgas bzw. im Anodengas zu reduzieren.

Das Brennstoffzellensystem 3 kann ferner einen Restgasbrenner 27 aufweisen, der dazu dient, Wasserstoffgas enthaltendes Anodenabgas der Brennstoffzelle 20 mit Sauerstoffgas enthaltendem Kathodenabgas der Brennstoffzelle 20 zu verbrennen. Hierdurch kann die Wärmeausbeute des Brennstoffzellensystems 3 verbessert werden, während gleichzeitig die Schadstoffemission des Brennstoffzellensystems 3 reduziert wird. Bei der hier gezeigten Ausführungsform ist der Restgasbrenner 27 über eine Anodenabgasleitung 28 an die Anodenseite 22 der Brennstoffzelle 20 angeschlossen und über eine Kathodenabgasleitung 29 an die Kathodenseite 24 der Brennstoffzelle 20 angeschlossen. Grundsätzlich können bei einer bevorzugten Ausführungsform der Restgasbrenner 27 und die Brennstoffzelle 20 eine bauliche Einheit bilden, derart, dass der Restgasbrenner 27 die Ausgangsseite der Brennstoffzelle 20 bildet.

Vorzugsweise kann außerdem eine Rezirkulationsleitung 52 vorgesehen sein, die von der Anodenabgasleitung 28 abzweigt und an die Eingangsseite des Reformers 14 angeschlossen ist. In der Rezirkulationsleitung kann ein Rezirkulationswärmeübertrager 53 angeordnet sein, der im Beispiel außerdem in die Oxidatorleitung 15 eingebunden ist. Hierdurch kann zur Verbesserung des Reformerprozesses die Temperatur des Oxidators erhöht werden. Außerdem lässt sich dadurch die Temperatur des rückgeführten Anodenabgases absenken, was es ermöglicht, in der Rezirkulationsleitung 52 stromab des Rezirkulationswärmeübertragers 53 eine Fördereinrichtung 54, z.B. ein Gebläse oder ein Kompressor, anzuordnen, die aufgrund der reduzierten Anodenabgastemperatur vergleichsweise preiswert realisiert werden kann. Auch diese Fördereinrichtung kann z.B. mit dem Brennstoffzellenstrom 13 betrieben werden.

Vorzugsweise kann das Brennstoffzellensystem 3 außerdem mit zumindest einem Wärmeübertrager 30 ausgestattet sein, der dazu dient, der einem vom Restgasbrenner 27 erzeugten Brennerabgas Wärme entzieht und auf ein zu erwärmendes Medium überträgt. Beispielsweise überträgt der Wärmeübertrager 30 Wärme vom Brennerabgas auf das Kathodengas, das der Brennstoffzelle 20 zugeführt wird. Zu diesem Zweck ist der Wärmeübertrager 30 hier einerseits in eine Abgasleitung 31, die Brennerabgas vom Restgasbrenner 27 abführt, und andererseits in die Kathodengasleitung 23 eingebunden. Die Kathodengasleitung 23 kann, insbesondere stromauf des Wärmeübertragers 30, eine Fördereinrichtung 32, z.B. ein Gebläse enthalten, um das Kathodengas anzutreiben. Bei einer bevorzugten Ausführungsform können der Restgasbrenner 27 und der Wärmeübertrager 30 eine bauliche Einheit bilden. Hierbei kann der Wärmeübertrager 30 quasi die Ausgangsseite des Restgasbrenners 27 bilden.

Das Fahrzeug 1 kann zur Klimatisierung des Raums 4 optional mit wenigstens einer Heizeinrichtung 33 bzw. 34 bzw. 55 ausgestattet sein. Beispielsweise kann es sich bei einer solchen Heizeinrichtung 33 um einen Wärmeübertrager handeln, der einerseits in die Belüftungsleitung 10 und andererseits in einen Kühlkreis 35 der Brennkraftmaschine 18 eingebunden ist, sofern das Fahrzeug 1 eine derartige Brennkraftmaschine 18 aufweist. Der Kühlkreis 35 enthält ferner einen als Kühler bezeichneten weiteren Wärmeübertrager 36, der mit einer Luftströmung 37 beaufschlagbar ist, die durch den Fahrtwind des Fahrzeugs 1 gebildet und bedarfsabhängig durch ein nicht gezeigtes Kühlergebläse des Fahrzeugs 1 unterstützt ist. Ferner enthält der Kühlkreis 35 eine Fördereinrichtung 38, zum Beispiel eine Pumpe, zum Antreiben des Kühlmittels. Die Fördereinrichtung 38 kann durch die Brennkraftmaschine 18 direkt mechanisch angetrieben sein. Ebenso ist es grundsätzlich möglich, die Fördereinrichtung 38 elektrisch zu betreiben und zwar insbesondere mit dem Strom 13 des Brennstoffzellensystems 3.

Zusätzlich oder alternativ kann eine solche Heizeinrichtung 34 als elektrische Heizung ausgebildet sein, wobei die elektrische Heizung 34 auf geeignete Weise in die Belüftungsleitung 10 eingebunden ist. Zweckmäßig wird diese elektrische Heizung 34 mit dem Strom 13 des Brennstoffzellensystems 3 betrieben.

Zusätzlich oder alternativ kann eine solche Heizeinrichtung 55 wieder als (Hilfs-)Wärmeübertrager ausgestaltet sein, der einerseits in die Belüftungsleitung 10 und andererseits in die Abgasleitung 31 des Restgasbrenners 27 stromab des (Haupt-)Wärmeübertragers 30 eingebunden ist. Alternativ kann dieser Hilfs-Wärmeübertrager 55 auch in den zuvor genannten Kühlkreis 35 sowie in die Abgasleitung 31 des Restgasbrenners 27 stromab des Haupt-Wärmeübertragers 30 eingebunden sein. Durch einen derartigen Hilfs-Wärmeübertrager 55 kann die im Brennerabgas auch stromab des Haupt-Wärmeübertragers 30 noch immer vorhandene hohe Restwärme sinnvoll genutzt werden.

Das erfindungsgemäße Fahrzeug 1 ist außerdem mit einer Wasserzuführeinrichtung 39 ausgestattet, die so ausgestaltet ist, dass damit das Brennstoffzellensystem 3 mit Kondenswasser der Kühleinrichtung 2 versorgt werden kann. Die Wasserzuführeinrichtung 39 kann entsprechend der hier gezeigten, bevorzugten Ausführungsform einen Wasserspeicher 40 aufweisen, in dem Kondenswasser der Kühleinrichtung 2 bevorratet werden kann. Besagter Wasserspeicher 40 kann optional mit einem Überlauf 41 versehen sein. Vorzugsweise kann der Wasserspeicher 40 mit einer Defrosteinrichtung 42 ausgestattet sein. Die Defrosteinrichtung 42 arbeitet beispielsweise elektrisch und kann zum Beispiel vom Brennstoffzellensystem 3 mit elektrischem Strom 13 versorgt werden. Ferner kann die Wasserzuführeinrichtung 39 mit einer Fördereinrichtung 43, zum Beispiel eine Pumpe, ausgestattet sein, die das Kondenswasser in einer Wasserleitung 44 antreibt. Auch diese Fördereinrichtung 43 kann mit elektrischem Strom 13 des Brennstoffzellensystems 3 betrieben werden.

Die Wasserzuführeinrichtung 39 ist vorzugsweise eingangsseitig an den Kondensatablauf 11 des Verdampfers 6 beziehungsweise des Kühlers 6 beziehungsweise des Trockners 6 angeschlossen. Hierzu ist die Wasserleitung 44 mit dem Kondensatablauf 11 verbunden. Die Wasserzuführeinrichtung 39 kann ausgangsseitig an wenigstens eine Komponente des Brennstoffzellensystems 3 angeschlossen sein. Dabei kann auch vorgesehen sein, dass die Wasserzuführeinrichtung 39 gleichzeitig an mehrere Komponenten des Brennstoffzellensystems 3 angeschlossen ist. Im Folgenden werden mehrere ausgangsseitige Anschlussmöglichkeiten für die Wasserzuführeinrichtung 39 exemplarisch erläutert, die jeweils alternativ oder in beliebigen Kombinationen kumulativ realisierbar sind. Dabei hat die nachfolgende Aufzählung keinen Anspruch auf Vollständigkeit und dient nicht zur Beschränkung der Allgemeinheit der vorliegenden Erfindung.

Die Wasserzuführeinrichtung 39 kann über die Wasserleitung 44 beziehungsweise über einen Leitungszweig 45 an die Eingangsseite des Reformers 14 angeschlossen sein. Der Anschluss erfolgt dabei vorzugsweise über einen Verdampfer 46, um das Kondenswasser dampfförmig in den Reformer 14 einbringen zu können. Durch den Wasserdampf kann der Wasserstoffgasgehalt des Reformatgases, also des Anodengases erhöht werden, wobei gleichzeitig eine Temperaturabsenkung des Reformers 14 erreichbar ist. Die Menge des dem Reformer 14 zugeführten Wassers beziehungsweise Wasserdampfes ist mit einem im entsprechenden Zweig 45 angeordneten Stellventil 47 einstellbar.

Ebenso ist es möglich, Wasser beziehungsweise Wasserdampf über einen anderen Zweig 45 dem Anodengas zuzuführen. Dementsprechend ist die Wasserzuführeinrichtung 39, vorzugsweise über einen Verdampfer 46, an die Anodengasleitung 21 angeschlossen. Die Mengensteuerung erfolgt wieder über ein Stellventil 47. Durch den Wasserdampf im Anodengas kann eine Regeneration der Anode beziehungsweise der Anodenseite 22 der Brennstoffzelle 20 realisiert werden, wodurch sich die Effektivität der Brennstoffzelle 20 steigern lässt. Dies gilt bevorzugt für eine Hochtemperatur-Brennstoffzelle.

Bei einer Niedertemperatur-Brennstoffzelle kann der Brennstoffzellenprozess verbessert werden, indem Wasser bzw. Wasserdampf der Kathodenseite 24 zugeführt wird. Beispielsweise ist dazu die Wasserleitung 44 über einen entsprechenden Zweig an die Kathodengasleitung 23 angeschlossen.

Ferner kann Wasser beziehungsweise Wasserdampf dem Anodenabgas und/dem Kathodenabgas zugeführt werden. Entsprechende Zweige 45 können mittels Stellventilen 47 gesteuert werden und sind vorzugsweise über Verdampfer 46 an die Anodenabgasleitung 28 beziehungsweise an die Kathodenabgasleitung 29 angeschlossen. Außerdem ist es optional möglich, Wasser beziehungsweise Wasserdampf über einen Kühlgasanschluss 48 direkt dem Restgasbrenner 47 zuzuführen. Auch hier kann ein Verdampfer 46 vorgesehen sein, ebenso ein Stellventil 47. Die Einleitung von Wasserdampf beziehungsweise von Kondenswasser in das Kathodenabgas beziehungsweise in das Anodenabgas beziehungsweise direkt in den Restgasbrenner 27 über den Kühlgasanschluss 48 führt zu einer Kühlung beziehungsweise Absenkung der Verbrennungstemperatur im Restgasbrenner 27, wodurch dieser sowie nachfolgende Komponenten vor einer Überhitzung geschützt werden können.

Ebenso ist es möglich, über einen entsprechenden Zweig 45 Wasser beziehungsweise Wasserdampf in das Brennerabgas einzuleiten, um dieses stromauf des Wärmeübertragers 30 zu kühlen. Hierdurch kann eine Überhitzung des Wärmeübertragers 30 vermieden werden. Die Wasserzuführeinrichtung 39 kann dabei insbesondere über einen Verdampfer 46 an die Abgasleitung 31 angeschlossen sein und kann mit einem entsprechenden Stellventil 47 steuerbar sein.

Die Wasserzuführeinrichtung 39 kann ferner mit einer Steuereinrichtung 49 ausgestattet sein, mit deren Hilfe die Wasserzuführeinrichtung 39 betätigbar ist. Die Steuereinrichtung 49 umfasst eine Steuerung 50 beziehungsweise ein Steuergerät 50 sowie die Stellventile 47 und kann außerdem mit der Fördereinrichtung 43 verbunden sein. Die Steuereinrichtung 49 ist bevorzugt so ausgestaltet, dass sie in Abhängigkeit des jeweiligen Betriebszustands des Brennstoffzellensystems 3 Kondenswasser der Kühleinrichtung 2 über die Wasserzuführeinrichtung 39 dem Brennstoffzellensystem 3 zuführt. Vorzugsweise erfolgt die Zuführung des Kondenswassers in Abhängigkeit des Betriebszustands des Brennstoffzellensystems 3 so, dass die einzelnen Komponenten, wie zum Beispiel Reformer 14, Brennstoffzelle 20, Restgasbrenner 27 und Wärmeübertrager 30 bedarfsabhängig mit Kondenswasser beziehungsweise Wasserdampf versorgt werden, um den jeweils gewünschten Effekt zu erzielen.

## Patentansprüche

1. Fahrzeug, insbesondere Straßenfahrzeug,
- mit einer Kühleinrichtung (2) zum Kühlen eines Raums (4) des Fahrzeugs (1),
- mit einem Brennstoffzellensystem (3) zum Generieren von elektrischem Strom (13),
- mit einer Wasserzuführeinrichtung (39) zum Versorgen des Brennstoffzellensystems (3) mit Kondenswasser der Kühleinrichtung (2).

2. Fahrzeug nach Anspruch 1,
**dadurch gekennzeichnet,**
**dass** die Wasserzuführeinrichtung (39) einen Wasserspeicher (40) zur Bevorratung des Kondenswassers aufweist.

3. Fahrzeug nach Anspruch 2,
**dadurch gekennzeichnet,**
**dass** der Wasserspeicher (40) einen Überlauf (41) und/oder eine Defrosteinrichtung (42) aufweist.

4. Fahrzeug nach einem der Ansprüche 1 bis 3,
**dadurch gekennzeichnet,**
**dass** die Wasserzuführeinrichtung (39) eine Fördereinrichtung (43) zum Antreiben des Kondenswasser aufweist.

5. Fahrzeug nach einem der Ansprüche 1 bis 4,
**dadurch gekennzeichnet,**
- **dass** die Kühleinrichtung (2) einen Kühler (6) und/oder Trockner (6) zum Kühlen und/oder Trocknen einer Gasströmung zur Beaufschlagung des zu kühlenden Raums (4) aufweist,
- **dass** die Wasserzuführeinrichtung (39) eingangsseitig an einen Kondensatablauf (11) des Kühlers (6) und/oder Trockners (6) angeschlossen ist.

6. Fahrzeug nach einem der Ansprüche 1 bis 5,
**dadurch gekennzeichnet,**
- **dass** das Brennstoffzellensystem (3) einen Reformer (14) zum Generieren eines Wasserstoffgas enthaltenden Reformat-oder Anodengases aus einem Wasserstoff enthaltenden Brennstoff und einem Sauerstoff enthaltenden Oxidator aufweist,
- **dass** die Wasserzuführeinrichtung (39) ausgangsseitig an eine Eingangsseite des Reformers (14) angeschlossen ist.

7. Fahrzeug nach einem der Ansprüche 1 bis 6,
**dadurch gekennzeichnet,**
- **dass** das Brennstoffzellensystem (3) eine Brennstoffzelle (20) zum Generieren des elektrischen Stroms (13) aus einem Wasserstoffgas enthaltenden Anodengas und einem Sauerstoffgas enthaltenden Kathodengas aufweist,
- **dass** die Wasserzuführeinrichtung (39) ausgangsseitig an eine das Anodengas der Brennstoffzelle (20) zuführende Anodengasleitung (21) und/oder an eine das Kathodengas der Brennstoffzelle (20) zuführende Kathodengasleitung (23) angeschlossen ist.

8. Fahrzeug nach einem der Ansprüche 1 bis 7,
**dadurch gekennzeichnet,**
- **dass** das Brennstoffzellensystem (3) einen Restgasbrenner (27) zum Verbrennen eines Wasserstoffgas enthaltenden Anodenabgases mit einem Sauerstoffgas enthaltenden Kathodenabgas aufweist,
- **dass** die Wasserzuführeinrichtung (39) ausgangsseitig an eine das Anodenabgas dem Restgasbrenner (27) zuführende Anodenabgasleitung (28) und/oder an eine das Kathodenabgas dem Restgasbrenner (27) zuführende Kathodenabgasleitung (29) und/oder an einen Kühlgasanschluss (48) des Restgasbrenners (27) und/oder an eine Brennerabgas vom Restgasbrenner (27) abführende Abgasleitung (31) angeschlossen ist.

9. Fahrzeug nach einem der Ansprüche 6 bis 8,
**dadurch gekennzeichnet,**
**dass** die Wasserzuführeinrichtung (39) über einen Verdampfer (46) an die Eingangsseite des Reformers (14) und/oder an die Anodengasleitung (21) und/oder an die Kathodengasleitung (23) und/oder an die Anodenabgasleitung (28) und/oder an die Kathodenabgasleitung (29) und/oder an den Kühlgasanschluss (48) und/oder an die Abgasleitung (31) angeschlossen ist.

10. Fahrzeug nach einem der Ansprüche 1 bis 9,
**dadurch gekennzeichnet,**
**dass** eine Steuereinrichtung (49) zur Betätigung der Wasserzuführeinrichtung (39) vorgesehen ist, die in Abhängigkeit des Betriebszustands des Brennstoffzellensystems (3) Kondenswasser über die Wasserzuführeinrichtung (39) dem Brennstoffzellensystem (3) zuführt.
